# EUROPEAN PATENT SPECIFICATION

(11) **EP 2 060 989 B1**
(45) Date of publication and mention of the grant of the patent: **08.04.2015**
(21) Application number: 08168300.5
(22) Date of filing: 04.11.2008
(51) Int. Cl.: G06F 21/00

(54) **Digital rights management method and apparatus of mobile terminal**
Verwaltungsverfahren für digitale Rechte und Vorrichtung eines mobilen Endgeräts
Procédé de gestion des droits numériques et appareil pour terminal mobile

(30) Priority: 07.11.2007 KR 20070112913
(43) Date of publication of application: 20.05.2009
(73) Proprietor: Samsung Electronics Co., Ltd., Suwon-si, Gyeonggi-do, 443-742 (KR)
(72) Inventor: Ham, Dong Eup, Suwon-si, Gyeonggi-do (KR)
(74) Representative: Gover, Richard Paul

(56) References cited:
- US-A- 5 500 897
- US-A1- 2003 105 890
- US-A1- 2007 121 432

## Description

### BACKGROUND OF THE INVENTION

### 1. Field of the Invention:

The present invention relates to a Digital Right Management (DRM). More particularly, the present invention relates to a DRM method and apparatus of a mobile terminal that is capable of protecting unauthorized use of time-based DRM content and improving license validation reliability by providing a reliable reference time regardless of changes of local time and time zone.

### 2. Description of the Related Art:

The DRM is an access control technology to protect the intellectual property of distributed digital media by limiting usage of digital media using encryption techniques. That is, the DRM technology allows securely transmitting contents from a Content Provider (CP) to a user and protecting the contents from being illegally used and distributed.

In order to use DRM content on a mobile terminal, the user has to access a content server and download a specific DRM content item, metadata, and a license to the mobile terminal required for using the DRM content item. Here, the metadata is data about the DRM content item, and the license contains a decryption key for decrypting the encrypted DRM content item and states specific usage rights on the DRM content item (e.g. permitted playback count and time). After acquiring the license, the user can use the DRM content item.

Typically, the time-based DRM content item is constrained in usage with reference to a local time of the mobile terminal or a Network Identity and Time Zone (NITZ) time.

However, the conventional NITZ time-based DRM cannot be applied globally since service providers may provide different NITZ information.

Also, the conventional local time-based DRM has a drawback in that the usage right protection is unreliable since the local time changes when the mobile terminal moves to another time zone or according to an application of day light saving time system. Furthermore, the local time can be changed by a user for unauthorized use of the DRM content item.

US-2007/0121432-A1 discloses an apparatus and method for provided secure time. There is further disclosed an apparatus and method for securely reproducing contents using the secure time, and a method of securely transmitting data using the secure time. The apparatus includes a clock whose time can be changed, a time difference storing unit storing the time difference between correct time and the time on the clock, a time difference setting unit performing a time difference setting process, and a time providing unit to provide the correct time. The apparatus therefore comprises a single clock whose time can be freely changed by a user. A secure clock that can provide the correct time can be embodied as a software programme.

### SUMMARY OF THE INVENTION

An aspect of the present invention is to address at least the above-mentioned problems and/or disadvantages and to provide at least the advantages described below. Accordingly, an aspect of the present invention is to provide a DRM method and apparatus of a mobile terminal that is capable of efficiently protecting usage rights of DRM content items by providing an absolute reference time.

In accordance with a first aspect of the present invention there is provided a digital rights management method of a mobile terminal for playing a right protected content with a time-constrained license, the method comprising: detecting a playback command for playing a right protected content; determining whether a previously stored reference parameter exists having an index assigned to the reference parameter associated with the right protected content selected for playback, the reference parameter indicating the difference between a reference time transmitted by a server and a local time provided by the mobile terminal; and testing, when the previously stored associated reference parameter exists, validity of a license of the right protected content with reference to the reference parameter and a local time.

In accordance with a second aspect of the present invention there is provided a digital rights management apparatus of a mobile terminal, the apparatus comprising: a memory unit for storing a right protected content, a time-constrained license for playing the right protected content, a reference time transmitted by a server for defining an expiry time of the license, and a reference parameter having an assigned index associated with the right protected content; a right protected content playback module for replaying the right protected content if the license is valid; a clock module for providing a local time of the mobile terminal; an input unit for receiving an input of a local time change command; and a control unit arranged to: generate the reference parameter indicating the difference between the reference time and the local time using a local time when the license is acquired; and the reference time: to apply, when the local time is changed in response to the local time change command, the changed time amount to the reference parameter; and to test validity of the license with reference to the associated changed time amount-applied reference parameter. Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following description taken in conjunction with the accompanying drawings, in which:
FIG 1 is a block diagram illustrating a configuration of a mobile terminal according to an exemplary embodiment of the present invention;
FIG. 2 is a block diagram illustrating a configuration of a control unit according to an exemplary embodiment of the present invention;
FIG. 3 is a flowchart illustrating a delta value generation procedure of a digital rights management method for a mobile terminal according to an exemplary embodiment of the present invention; and
FIG. 4 is a block diagram illustrating a content item playback procedure of a digital rights management method for a mobile terminal according to an exemplary embodiment of the present invention.

Throughout the drawings, like reference numerals will be understood to refer to like parts, components, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following descriptions of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise.

In the following description, the DRM content item is a time constraint DRM content item of which usage is constrained by at least one of an expiry time and a usage time. The expiry time-constrained DRM content item is configured to be used until an expiry date of the DRM content item. The usage time-constrained DRM content item can be used for a certain amount of usage time.

In the following description, the mobile terminal can be any of a digital broadcast receiver, a Personal Digital Assistant (PDA), a Smartphone, and a mobile phone supporting at least one of mobile communication standards including Code Division Multiple Access (CDMA) system, Global System for Mobile communication (GSM) system, General Packet Radio Service (GPRS) system, Wideband CDMA (WCDMA) system, and the like, equipped with a DRM module that is enabled to process DRM-related operations.

In the following description, the term "delta value" defines a reference parameter for indicating difference between a reference time transmitted by a server and a local time provided by the mobile terminal, and the term "reference delta value" defines a delta value obtained by applying varied time information generated according to the variation of the local time of the mobile terminal.

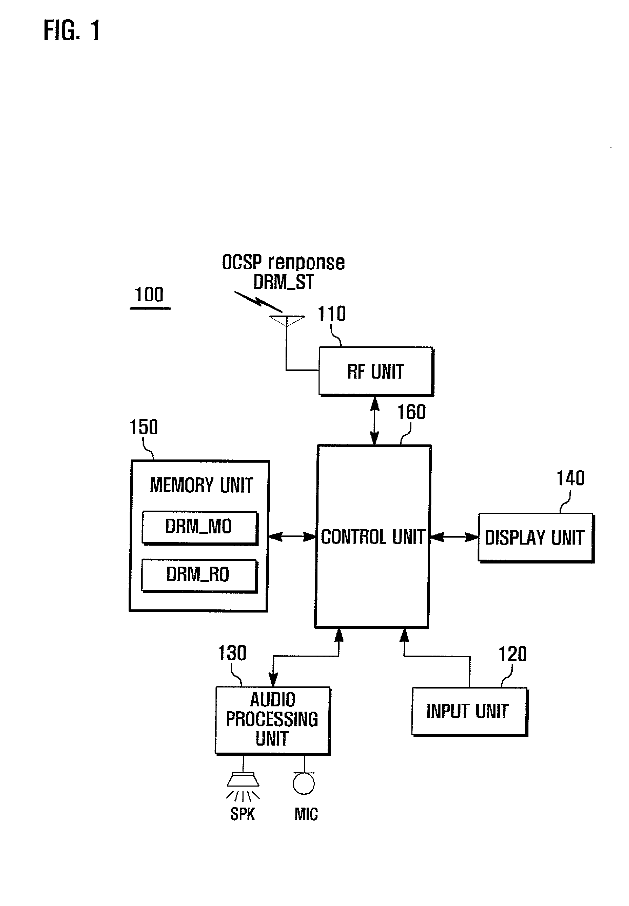

FIG 1 is a block diagram illustrating a configuration of a mobile terminal according to an exemplary embodiment of the present invention.

Referring to FIG. 1, the mobile terminal 100 includes a Radio Frequency (RF) unit 110, an input unit 120, an audio processing unit 130, a display unit 140, a memory unit 150, and a control unit 160.

The RF unit 110 is responsible for establishing communication channels with a base station or other devices for exchanging audio and video data. The RF unit 110 is also implemented to exchange control signals with a web server for downloading data via the base station. The RF unit 110 includes an RF transmitter (not shown) for up-converting and amplifying transmission signals and an RF receiver (not shown) for low noise amplifying and down-converting received signals.

More particularly in this exemplary embodiment, the RF unit 110 establishes a communication channel such that the mobile terminal 100 downloads DRM content items (DRM_MO) and licenses (DRM_RO) required to use the DRM_MO. The RF unit 110 receives an Online Certificate Status Protocol (OCSP) Response message carrying a DRM Secure Time (DRM_ST) from a contents server or a reference server to which the contents server refers to such as an OCSP server, and sends the DRM_ST to the control unit 160. Typically, the DRM_ST is provided by the OCSP server. The OCSP server can be integrated into the contents server. The OCSP server defines information on a request message structure of a client application program for requesting certificate status information and a response message structure of a server application program, and the OCSP server provides these messages. More particularly in this exemplary embodiment, the reference time information carried on the OCSP response message is used for verifying the usage right on the DRM content item.

The input unit 120 is provided with a plurality of alphanumeric keys for receiving alphanumeric data and function keys for configuring and executing various functions of the mobile terminal 100. The function keys can be implemented in a form of separately arranged navigation keys, side keys, and shortcut keys. The input unit 120 receives a key input from the user and then outputs the key input to the control unit 160. More particularly in this exemplary embodiment, the input unit 120 is configured to produce key sequences corresponding to the user input for accessing the contents server, selecting one of DRM_MOs stored in the memory unit 150, and playing the selected DRM_MO, and then outputting these key sequences to the control unit 160. The input unit 120 also generates key sequences for correcting the local time of the mobile terminal and outputs the key sequences to the control unit 160.

The audio processing unit 130 processes audio data including voice data to output an audible sound wave through a speaker (SPK) and processes sound inputs through a microphone (MIC) to output an audio data to the control unit 160. More particularly in this exemplary embodiment, the audio processing unit 130 is configured to process audio data contained in the DRM_MO to be output through the speaker (SPK) in the audible sound wave.

The display unit 140 displays various menu screens, user-input data and operation status of the mobile terminal 100. That is, the display unit 140 displays an idle mode screen, application menu screens, a message composition screen, a voice communication indication screen, and the like. The display unit 140 can be implemented with a Liquid Crystal Display (LCD). In a case of using the LCD having touchscreen functionality, the display unit 140 may work as a part of the input unit 120. More particularly in this exemplary embodiment, the display unit 140 is configured to display a contents server connection status screen, an OCSP Response reception screen, a DRM_MO playback screen, and a DRM_MO playback status screen. The display unit 140 also displays a content items list for showing items stored in the memory unit 150, an alert message screen for showing the validity of a DRM_RO when a DRM_MO is selected from the content items list, and a video image represented by the video data contained in the DRM_MO while playing the DRM_MO. The display unit 140 also displays local time information on a specific operation mode screen such as an idle mode screen. The display unit 140 can be configured to display user-preferred time information set according to at least one of an application of day light saving time and a change of time zone.

The memory unit 150 stores the DRM content items (DRM_ROs) including time constraint DRM content items and a DRM content item playback application program. The memory unit 150 loads the DRM content item playback application program onto the control unit 160. The memory unit 150 also stores reference time information received from the contents server or the OCSP server and the reference parameter, i.e. a delta value calculated from the local time of the mobile terminal and reference time information. The memory unit 150 may be divided into a program region and a data region.

The program region stores an Operating System (OS) for driving application programs, application programs associated with the playback of the DRM content items and other optional functions such as a camera function, an audio playback function, and a video playback function. The program region also stores an OCSP application module for processing the OCSP messages and a license validation application module that is loaded onto the control unit 160 when the DRM contents item playback application is activated. That is, when a specific function is activated in response to a user request, the mobile terminal 160 runs an application program for executing an activated function under the control of the control unit 160.

The data region stores data generated when the mobile terminal operates, DRM content items (DRM_MOs), licenses (DRM_ROs), OCSP Response messages, reference time information, and a reference parameter. The data region also stores application data generated while running the application programs (such as still and motion images taken by the camera function, phonebook data, and audio and video data) and user data input by the user. In an exemplary implementation, the OCSP Response messages, reference time information, and the reference parameter among the application data are stored in a secure storage region. The reference time information stored in the data region is output to the control unit 160 for use in calculation of the reference parameter, and the reference parameter is used for verifying the validity of the licenses (DRM_ROs).

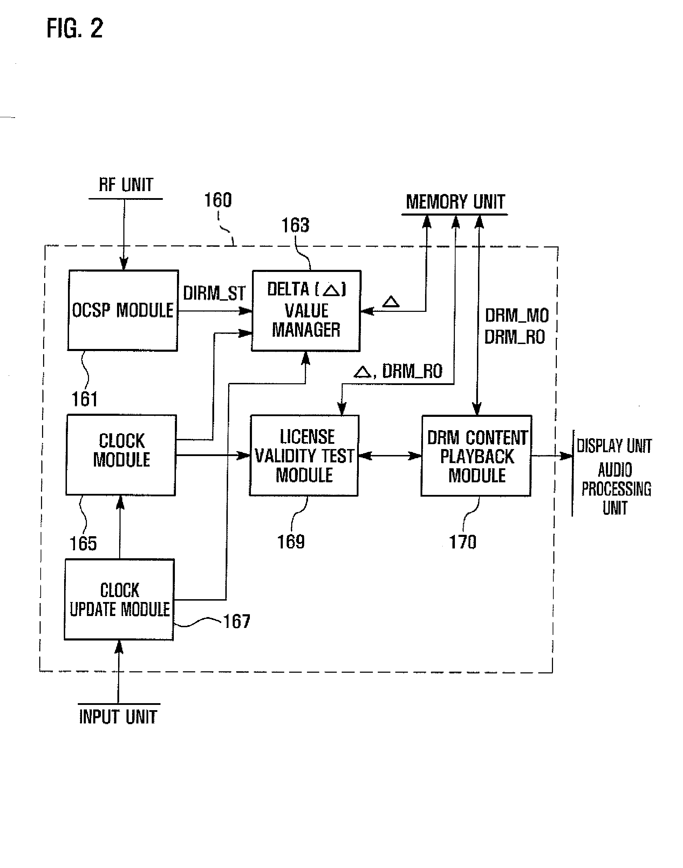

The control unit 160 controls overall operations and signaling between internal components of the mobile terminal 100. The control unit 160 may include a modem and a codec (not shown) for processing data stored in the memory unit 150 and signals to be transmitted and received through the RF unit 110. More particularly in this exemplary embodiment, the control unit 160 calculates the reference parameter on the basis of the reference time information contained the OCSP response message received from the OCSP server and verifies the validity of the license using the reference parameter. The operations and functions of the control unit 160 are described in greater detail with reference to FIG. 2.

FIG. 2 is a block diagram illustrating a configuration of a control unit according to an exemplary embodiment of the present invention.

Referring to FIG. 2, the control unit 160 includes an OCSP module 161, a delta (Δ) value manager 163, a clock module 165, a clock update module 167, a license validity test module 169, and a DRM content playback module 170.

The OCSP module 161 is responsible for processing an OCSP Response message received through the RF unit 110. The OCSP module 161 extracts the reference time information (DRM_ST) from the OCSP Response message and outputs the DRM_ST to the delta value manager 163.

The delta value manager 163 receives the DRM_ST output from the OCSP module 161 and receives current time information from the clock module 165. The delta value manager 163 calculates a delta value using the DRM_ST and the current time information. The delta value can be obtained by subtracting the current time from the DRM_ST. For example, when the DRM_ST is 10:50 and the current local time is 10:55, the delta value is -5 minutes. The delta value calculated by the delta value manager 163 is output to be stored into the memory unit 150. In an exemplary implementation, the delta value is stored within a secure storage region for preventing it from being modified by the user.

The delta value manger 163 receives updated reference time information from the clock update module 167. The updated reference time information is reflected to generate the delta value. In more detail, upon receipt of the updated reference time information from the clock update module 167, the delta value manager 163 reads the delta value stored in the memory unit 150 and calculates a new delta value using the updated reference time information and current time information. That is, the delta value manager 163 calculates a modification delta value by subtracting the current time from the updated reference time. For example, if the current time is 5:15 and the updated reference time is 4:15, the modificationdelta value is -60 minutes. Next, the delta value manager 163 generates a reference delta value by adding the modificationdelta value to the delta value read out of the memory unit 150. The delta value manager 163 updates the delta value stored in the memory unit 150 by replacing the delta value with the new delta value as the reference delta value. The reference delta value is used for verifying the validity of the license (DRM_RO). That is, the reference delta value is subtracted from the remained usable time of the corresponding DRM content item at the license validation process. For example, when the reference delta value is -62 minutes, the validity test is done with a value obtained by adding -62 minutes to the remained usable time of the DRM_MO.

The clock module 165 provides a current local time of the mobile terminal 100. The current local time of the mobile terminal 100 is controlled to be displayed on the display unit 140. The local time can be adjusted according to a key input. The clock module 165 outputs the current local time to the delta value manager 163 and the license validity test module 169. The delta value manager 163 outputs a delta value by comparing the current local time with the reference time extracted from the OCSP Response message, and the license validity test module 169 corrects the remained usage time by applying the delta value to the current local time such that the corrected remained usage time is used for verifying the validity of the corresponding DRM content item (DRM_MO).

The clock update module 167 receives a clock change command input through the input unit 120 and outputs a control signal corresponding to the clock change command to the clock module 165. The clock update module 167 also outputs changed time information to the delta value manager 163. The clock update module 167 generates the changed time information when the user changes the local time, the day light saving time is applied, and the mobile terminal moves to another time zone. That is, the changed time information is generated when the local time is changed by the user.

The license validity test module 169 is activated when the DRM content playback module 170 attempts to play a specific DRM content item (DRM_MO). The license validity test module 169 reads the reference delta value from the memory unit and receives the current local time from the clock module. The license validity test module 169 calculates the reference time by subtracting the delta value from the current local time or by subtracting the reference delta value from the changed time. Since the delta value or reference delta value is obtained by subtracting the current time from the reference time or by subtracting the current time from the changed time, it is possible to obtain an absolute reference time by adding the delta value to the current time or subtracting the reference time value from the changed time. In the case that the local time is changed by the user, the delta value is updated to the reference delta value such that the absolute reference time can be obtained by adding the reference delta value to the changed time. The license validity test module 169 verifies the validity of the license through the above procedure and outputs the validity test result to the DRM content playback module 170.

When it is determined that the license is valid, the DRM content playback module 170 plays the DRM content item (DRM_MO) corresponding to the verified license (DRM_RO).

As described above, digital rights management apparatus of the mobile terminal according to this exemplary embodiment can provide an absolute reference time even when the local time of the mobile terminal 100 is changed by at least one of the user and the time system change, thereby improving reliability of right protection of DRM contents.

An exemplary digital rights management method of the above structured mobile terminal is described hereinafter.

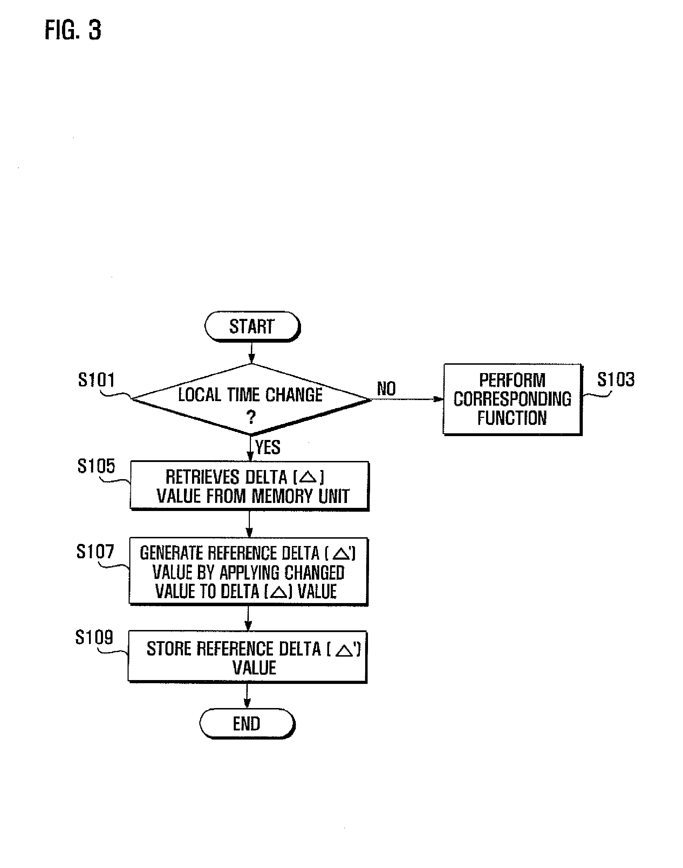

FIG. 3 is a flowchart illustrating a delta value generation procedure of a digital rights management method for a mobile terminal according to an exemplary embodiment of the present invention. In the following description, it is assumed that the delta value is pre-calculated and stored in the memory. That is, the control unit 160 calculates the delta value by subtracting the current local time of the mobile terminal from the reference time received from through the RF unit 110 and stores the delta value into the memory unit 150. The delta value can be modificated when a DRM content item is attempted to be played or whenever the local time is changed by the clock update module 167. In order to update the delta value at the time of DRM content playback, the control unit 160 stores the changed time information. In an exemplary implementation, the control unit 167 updates the delta value as a reference delta value whenever the clock update module 167 generates the changed time information. The delta value may be updated though a background process.

Referring to FIG. 3, the control unit 160 monitors to detect an event and, when an event is detected, determines whether the event is a local time change event at step S101. In order to allow changing the local time, the control unit 160 may include a clock update module. The clock update module is configured to generate changed time information when the local time is changed by one of a user, an application of day light saving time, and a change of time zone. When the clock update module generates the changed time information, the control unit 160 determines that the local time is changed.

When the event is not a local time change event, the control unit 160 performs a function associated with the event such as a voice communication function, a camera function, a file playback function, and a text messaging function at step S130.

In contrast, when the event is a local time change event, i.e. the changed time information is generated by the clock update module, the control unit 160 reads the delta value (Δ)from the memory unit 150 at step S105. Here, the delta value is a value generated with reference to the reference time and the current local time provided by the clock module 165. The delta value is stored in a specific region of the memory unit 150, i.e. a secure storage region, such that the control unit 160 should be allowed to access the secure storage region for reading the delta value.

After reading out the delta value (Δ), the control unit 160 generates a reference delta value (Δ') with reference to the changed time information at step S107. In more detail, the control unit 160 generates a changed delta value with reference to the changed time information and the current time information and then generates the reference data value using the changed delta value and the delta value read out from the memory unit 150. The reference delta value is a value reflecting the difference between the current time information and the changed time information.

Next, the control unit 160 stores the reference delta value into the memory 150 at step S109. In an exemplary implementation, the reference delta value is stored within a secure region of the memory unit 150. Here, the control unit 160 controls such that the previously stored delta value is maintained or removed for efficient memory utilization.

As described above, the update of the delta value is performed when the local time of the mobile terminal 100 is changed, and the reference delta value is generated to indicate the amount of time changed, thereby providing an absolute reference time in consideration of the changed time.

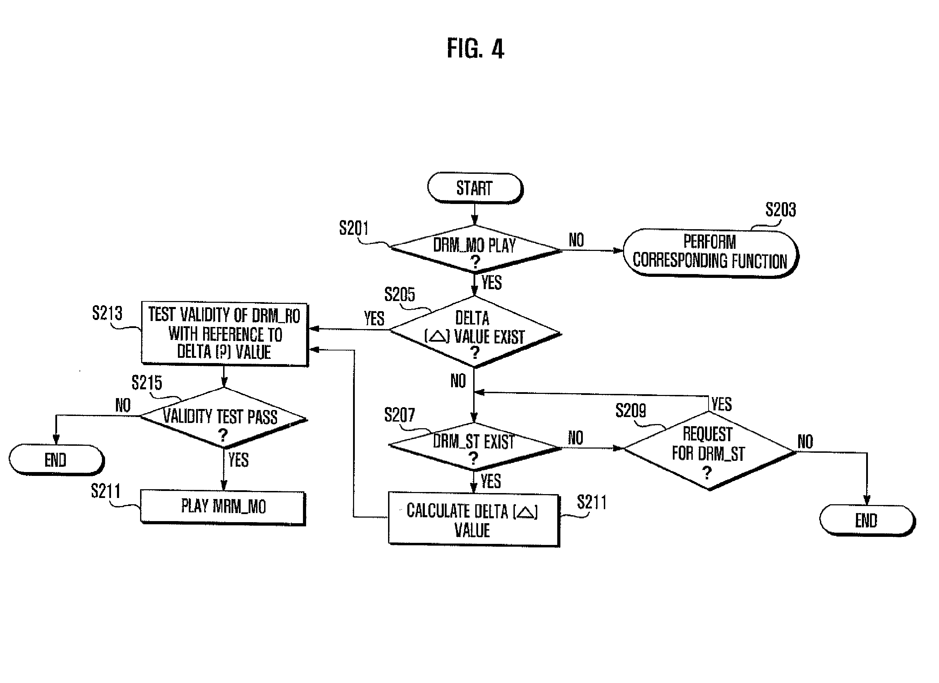

FIG. 4 is a block diagram illustrating a content item playback procedure of a digital rights management method for a mobile terminal according to an exemplary embodiment of the present invention. In this exemplary embodiment, the term "delta value" incorporates the meaning of the reference delta value. Since the delta value and reference delta value are compared with different values as described with FIG. 3, the two terms can be considered as a substantially identical parameter regardless of the change of local time. That is, the delta value is used with the current local time information and the reference delta value is used with the changed local time information, but they are substantially identical with each other.

Referring to FIG. 4, the control unit 160 monitors to detect an event and, when an event is detected, determines whether the event is a DRM content playback command at step S201. That is, the control unit 160 first displays a DRM contents list listing the DRM content items (DRM_MOs) stored in the memory unit 150 in response to a user command input through the input unit 120 and detects a selection command for selecting a DRM content item from the DRM contents list.

When the detected event is not the DRM content playback command, the control unit 160 performs a function associated with the event such as a voice communication function, a camera function, a file playback function, and a text messaging function at step S203.

In contrast, when the event is the DRM content playback command, the control unit 160 determines whether a previously stored delta value exists in the memory unit 150 at step S205. In this exemplary embodiment, the delta value is stored in a secure region of the memory unit 150 for preventing it from being modified by the user. In order to read out the delta value from the secure region of the memory unit 150, the control unit 160 is permitted to access the secure region. The control unit 160 checks the secure region of the memory unit 150 to search for the delta value. In a case that multiple delta values are found, the control unit 160 retrieves the target delta value with reference to indexes assigned to the multiple delta values associated with respective DRM content items (DRM_MOs) or DRM licenses (DRM_ROs).

When no delta value is found, the control unit 160 determines whether a previously stored reference time information (DRM_ST) exists at step S207. The reference time information (DRM_ST) is transmitted by the contents server or the OCSP server. Since the delta value may not be calculated in a certain case, the control unit 160 stores the reference time information (DRM_ST). The reference time information is also stored in the secure region of the memory unit 150. Accordingly, the control unit 160 accesses the secure region of the memory unit 150 to search for the previously stored reference time information (DRM_ST). Since there can be multiple DRM_STs corresponding to multiple DRM_MOs, the control unit 160 checks whether the DRM_ST corresponding to the target DRM_MO exists.

If no DRM_ST has been found, the control unit 160 determines whether a reference time information request command is input, i.e. whether to request the contents server or OCSP server for the DRM_ST at step S209. At this time, the control unit 160 controls to display an alert message informing of no DRM_ST and then present a query message asking whether to request the DRM_ST. The control unit 160 can be configured such that, when no DRM_ST corresponding to the DRM_RO for playing the DRM_MO, the control unit 160 automatically requests the server for the DRM_ST.

When no reference time information request command is input in a threshold time, the control unit 160 ends the DRM content item playback procedure. At this time, in an exemplary implementation, the control unit 160 displays an alert message informing the user of no valid DRM_RO and asking to download an appropriate DRM_ST.

In contrast, when a reference time information request command is input at step S209, the control unit 160 requests the server and returns to step S207. That is, if a reference time information request command is input through the input unit, the control unit connects to one of the contents server and the OCSP server, and downloads a DRM_ST associated with the DRM_RO.

In the meantime, if a DRM_ST is found in the memory unit at step S207 or received from the server at step S209, the control unit 160 calculates the delta value using the DRM_ST at step S211. As described above, the delta value is calculated using the current local time provided by the clock module of the mobile terminal and DRM_ST received from the server.

If a delta value is found at step S205 or calculated at step S211, the control unit 160 performs a validation test on the DRM_RO for the DRM_MO to be played at step S215. The validation test is performed by comparing an absolute reference time acquired by adding the delta value to the current local time and the expiry time of the DRM_RO. Here, the delta value varies according to the change of the local time. That is, when the local time of the mobile terminal is changed, the delta value is changed into the reference delta value. In the case of using the time constraint license, reference time information is required. In this exemplary embodiment, the delta value is the difference between the reference time information (DRM_ST) provided by the network and the local time of the mobile terminal. The delta value is updated according to the change of the local time and used for acquiring a reliable reference time for verifying the validity of the license (DRM_RO). The change of the mobile terminal can be done through the input unit of the mobile terminal. That is, the user can change the local time of the mobile terminal by manipulating the input unit for a specific purpose.

Next, the control unit 160 determines whether the DRM_RO passes the validation test at step S215 and, if the DRM_RO passes the validate test, controls to play the DRM_MO normally. Otherwise, if the DRM_RO fails the validation test, the control unit 160 ends the DRM_MO playback procedure and displays an alert message informing the expiry of the DRM_RO.

In the above descriptions, the delta value, changed delta value, and reference delta value are calculated through addition and/or subtraction operations of the reference time information and local time information. However the calculative operations can be modified according to the changes of factors. In a case that the local time is changed, the displacement amount between the local time and the changed local time is added to the current time when validation test is performed.

As described above, the digital rights management method and apparatus of a mobile terminal acquires an absolute reference time for testing validity of a license of a DRM contents item in consideration of displacement (delta value) recorded when the local time is changed, wherein the displacement is the difference between the local time and the changed local time, thereby improving the reliability of the license validation test.

Although exemplary embodiments of the present invention have been described in detail hereinabove, it should be clearly understood that many variations and/or modifications of the basic inventive concepts herein taught which may appear to those skilled in the present art will still fall within the scope of the present invention, as defined in the appended claims and their equivalents.

As described above, the digital rights management method and apparatus of the present invention provides the mobile terminal with an absolute reference time for testing validity of a license of a time constrained-DRM content item, thereby improving license validation reliability and protecting unauthorized use of DRM content items.

## Claims

1. A digital rights management method of a mobile terminal (100) for playing a right protected content with a time-constrained license, the method comprising:
detecting (S201) a playback command for playing a right protected content;
determining (S205) whether a previously stored reference parameter exists having an index assigned to the reference parameter associated with the right protected content selected for playback, the reference parameter indicating the difference between a reference time transmitted by a server and a local time provided by the mobile terminal; and
testing (S213), when the previously stored associated reference parameter exists, validity of a license of the right protected content with reference to the reference parameter and a local time.

2. The method of claim 1, further comprising determining (S207), when no previously stored reference parameter exist, whether a previously stored reference time exists.

3. The method of claim 2, further comprising generating (S211), when the previously stored reference time exists, the reference parameter using a current local time of the mobile terminal (100) and the reference time.

4. The method of claim 2, further comprising:
requesting (S209), when no previously stored reference time exists, a server to transmit the reference time;
receiving the reference time transmitted by the server; and
generating (S211) the reference parameter using the received reference time and the current local time of the mobile terminal (100).

5. The method of claim 1, further comprising:
generating (S211), when no previously stored reference parameter exists, the reference parameter using a reference time received from a server and a current local time of the mobile terminal (100);
changing (S101) the current local time according to a user input;
generating (S107) a changed reference parameter using the changed local time and the current local time;
generating a standard reference parameter using the reference parameter and the changed reference parameter;
detecting (S201) a playback command for playing the right protected content; and
testing (S213) a validity of a license of the right protected content with reference to the reference parameter and the current local time of the mobile terminal (100).

6. The method of claim 5, wherein the generating (S107) of the reference parameter comprises subtracting the current local time from the reference time.

7. The method of claim 5, wherein the generating (S107) of the changed reference parameter comprises subtracting the current local time from the changed local time.

8. The method of claim 5, wherein the generating (S107) of the standard reference parameter comprises summing the reference parameter and the changed reference parameter.

9. The method of claim 5, wherein the validity of the license of the right protected content is determined (S213) with reference to a value obtained by adding the reference parameter to the local time.

10. A digital rights management apparatus of a mobile terminal (100), the apparatus comprising:
a memory unit (150) for storing a right protected content, a time-constrained license for playing the right protected content, a reference time transmitted by a server for defining an expiry time of the license, and a reference parameter having an assigned index associated with the right protected content;
a right protected content playback module (170) for replaying the right protected content if the license is valid;
a clock module (165) for providing a local time of the mobile terminal (100);
an input unit (120) for receiving an input of a local time change command; and
a control unit (160) arranged to:
generate (S211) the reference parameter indicating the difference between the reference time and the local time using a local time when the license is acquired and the reference time;
to apply (S107), when the local time is changed in response to the local time change command, the changed time amount to the reference parameter; and
to test (S213) validity of the license with reference to the associated changed time amount-applied reference parameter.

11. The apparatus of claim 10, further comprising:
a clock update module (167) for generating a control signal instructing change of the local time and for outputting the control signal to the clock module (165); and
a license validity test module (169) for testing (S213) the validity of the license with reference to one of the reference parameter and an updated reference parameter obtained by applying changed amount.

12. The apparatus of claim 11, wherein the control unit (160) is arranged to request (S209), when the right protected content is requested to be played and no reference time exist in the memory unit (150), a server to transmit the reference time, and the control unit is arranged to receive the reference time from the server.

13. The apparatus of claim 11, wherein the license validity test module (169) is arranged to generate (S107) the reference parameter by subtracting a current local time of the mobile terminal (100) from the reference time, to generate (S107) a changed reference parameter by subtracting the current local time from the changed local time, generates a standard reference parameter by summing the reference parameter and the changed reference parameter, and to test (S213) a validity of the license of the right protected content with reference to a value obtained by adding the standard reference parameter to the current local time of the mobile terminal (100) at the time when a playback command for playing the right protected content is detected.

## Patentansprüche

1. Digitales Rechteverwaltungsverfahren eines mobilen Endgeräts (100) zur Wiedergabe von rechtegeschützten Inhalten mit einer zeitlich begrenzten Lizenz, wobei das Verfahren Folgendes umfasst:
Erfassen (S201) eines Wiedergabebefehls zur Wiedergabe von rechtegeschützten Inhalten;
Ermitteln (S205), ob ein zuvor gespeicherter Referenzparameter existiert, wobei dem Referenzparameter ein Index zugewiesen ist, der den rechtegeschützten Inhalten zugeordnet ist, die zur Wiedergabe ausgewählt werden, wobei der Referenzparameter die Differenz zwischen einem Referenzzeitpunkt, der von einem Server übertragen wird, und einer Ortszeit, die von dem mobilen Endgerät bereitgestellt wird; anzeigt und
Prüfen (S213), wenn der zuvor gespeicherte zugeordnete Referenzparameter existiert, der Gültigkeit der Lizenz der rechtegeschützte Inhalte mit Bezug auf den Referenzparameter und eine Ortszeit.

2. Verfahren nach Anspruch 1, das, wenn kein zuvor gespeicherter Referenzparameter existiert, ferner das Bestimmen (S207) umfasst, ob eine zuvor gespeicherte Referenzzeit existiert.

3. Verfahren nach Anspruch 2, das, wenn die zuvor gespeicherte Referenzzeit existiert, ferner das Erzeugen (S211) des Referenzparameters mit Hilfe einer Ortszeit des mobilen Endgeräts (100) und der Referenzzeit umfasst.

4. Verfahren nach Anspruch 2, das ferner Folgendes umfasst:
Anfordern (S209), wenn keine vorher gespeicherte Referenzzeit existiert, dass ein Server die Referenzzeit sendet;
Empfangen der Referenzzeit, die von dem Server übertragen wird; und
Erzeugen (S211) des Referenzparameters unter Verwendung der empfangenen Referenzzeit und der aktuellen Ortszeit des mobilen Endgeräts (100).

5. Verfahren nach Anspruch 1, das ferner Folgendes umfasst:
Erzeugen (S211), wenn kein zuvor gespeicherter Referenzparameter existiert, des Referenzparameters unter Verwendung einer Referenzzeit, die von einem Server empfangen wird, und einer aktuellen Ortszeit des mobilen Endgeräts (100);
Ändern (S101) der aktuellen Ortszeit gemäß einer Benutzereingabe;
Erzeugen (S107) eines geänderten Referenzparameters mit Hilfe der geänderten Ortszeit und der aktuellen Ortszeit;
Erzeugen eines Standardreferenzparameters mit Hilfe des Referenzparameters und des geänderten Referenzparameters;
Erfassen (S201) eines Wiedergabebefehls zur Wiedergabe der rechtegeschützten Inhalte; und
Prüfen (S213) einer Gültigkeit der Lizenz der rechtegeschützten Inhalte mit Bezug auf den Referenzparameter und der aktuellen Ortszeit des mobilen Endgeräts (100).

6. Verfahren nach Anspruch 5, wobei das Erzeugen (S107) des Referenzparameters das Subtrahieren der aktuellen Ortszeit von der Referenzzeit umfasst.

7. Verfahren nach Anspruch 5, wobei das Erzeugen (S107) des geänderten Referenzparameters das Subtrahieren der aktuellen Ortszeit von der geänderten Ortszeit umfasst.

8. Verfahren nach Anspruch 5, wobei das Erzeugen (S107) des Standardreferenzparameters das Summieren des Referenzparameters und des geänderten Referenzparameters umfasst.

9. Verfahren nach Anspruch 5, wobei die Gültigkeit der Lizenz der rechtegeschützten Inhalte unter Bezugnahme auf einen Wert bestimmt (S213) wird, der durch Addieren des Referenzparameters zur Ortszeit erhalten wird.

10. Digitale Rechteverwaltungsvorrichtung eines mobilen Endgeräts (100), wobei die Vorrichtung Folgendes umfasst:
eine Speichereinheit (150) zum Speichern von rechtegeschützten Inhalten, eine zeitlich eingeschränkte Lizenz für die Wiedergabe von rechtegeschützten Inhalten, eine Referenzzeit, die von einem Server übertragen wird, zur Definition einer Ablaufzeit der Lizenz und einen Referenzparameter mit einem zugeordneten Index, der den rechtegeschützten Inhalten zugeordnet ist;
ein Wiedergabemodul (170) für rechtegeschützte Inhalte zur Wiedergabe von rechtegeschützten Inhalten, wenn die Lizenz gültig ist;
ein Taktmodul (165) zum Bereitstellen einer Ortszeit des mobilen Endgeräts (100);
eine Eingabeeinheit (120) zum Empfangen einer Eingabe eines Ortszeitänderungsbefehls; und
eine Steuereinheit (160), die für Folgendes ausgelegt ist:
Erzeugen (S211) des Referenzparameters, der die Differenz zwischen der Referenzzeit und der Ortszeit unter Verwendung einer Ortszeit, wenn die Lizenz erworben wird, und der Referenzzeit anzeigt;
Anwenden (S 107), wenn die Ortszeit als Reaktion auf den Ortszeitänderungsbefehl geändert wurde, des geänderten Zeitbetrags auf den Referenzparameter; und
Prüfen (S213) der Gültigkeit der Lizenz in Bezug auf den damit verbundenen Referenzparameter, auf den der geänderte Zeitbetrag angewendet wurde.

11. Vorrichtung nach Anspruch 10, die ferner Folgendes umfasst:
ein Taktaktualisierungsmodul (167) zum Erzeugen eines Steuersignals, das die Änderung der Ortszeit anweist, und zum Ausgeben des Steuersignals an das Taktmodul (165); und
eine Lizenzgültigkeitsprüfinodul (169) zum Prüfen (S213) die Gültigkeit der Lizenz in Bezug auf den Referenzparameter oder einen aktualisierten Referenzparameter, der durch Anwenden eines geänderten Betrags erhalten wurde.

12. Vorrichtung nach Anspruch 11, wobei die Steuereinheit (160) dafür ausgelegt ist, zu fordern (S209), wenn gefordert wird, dass die rechtegeschützten Inhalte wiedergegeben werden sollen, und keine Referenzzeit in der Speichereinheit (150) existiert, dass ein Server die Referenzzeit überträgt, und die Steuereinheit dafür ausgelegt ist, die Referenzzeit von dem Server zu empfangen.

13. Vorrichtung nach Anspruch 11, wobei das Lizenzgültigkeitsprüfinodul (169) für Folgendes ausgelegt ist: Erzeugen (S 107) des Referenzparameters durch Subtrahieren einer aktuellen Ortszeit des mobilen Endgeräts (100) von der Referenzzeit, Erzeugen (S107) eines geänderten Referenzparameters durch Subtrahieren der aktuellen Ortszeit von der geänderten Ortszeit, Erzeugen eines Standardreferenzparameters durch Summieren des Referenzparameters und des geänderten Referenzparameters und Prüfen (S213) einer Gültigkeit der Lizenz der rechtegeschützten Inhalte mit Bezug auf einen Wert, der durch Addieren des Standardreferenzparameters zu der aktuellen Ortszeit des mobilen Endgeräts (100) zu dem Zeitpunkt erhalten wird, wenn ein Wiedergabebefehl zur Wiedergabe der rechtegeschützten Inhalte erfasst wird.

## Revendications

1. Un procédé de gestion de droits numériques d'un terminal mobile (100) destiné à la lecture d'un contenu protégé par des droits avec une licence à durée limitée, le procédé comprenant :
la détection (S201) d'une commande de lecture destinée à la lecture d'un contenu protégé par des droits,
la détermination (S205) si un paramètre de référence conservé en mémoire antérieurement existe possédant un indice attribué au paramètre de référence associé au contenu protégé par des droits sélectionné à des fins de lecture, le paramètre de référence indiquant la différence entre une heure de référence transmise par un serveur et une heure locale fournie par le terminal mobile, et
le test (S213), lorsque le paramètre de référence associé conservé en mémoire antérieurement existe, de la validité d'une licence du contenu protégé par des droits en faisant référence au paramètre de référence et à une heure locale.

2. Le procédé selon la Revendication 1, comprenant en outre la détermination (S207), lorsqu'aucun paramètre de référence conservé en mémoire antérieurement n'existe, si une heure de référence conservée en mémoire antérieurement existe.

3. Le procédé selon la Revendication 2, comprenant en outre la génération (S211), lorsque l'heure de référence conservée en mémoire antérieurement existe, du paramètre de référence au moyen d'une heure locale actuelle du terminal mobile (100) et de l'heure de référence.

4. Le procédé selon la Revendication 2, comprenant en outre :
l'envoi d'une demande (S209), lorsqu'aucune heure de référence conservée en mémoire antérieurement n'existe, à un serveur de transmission de l'heure de référence,
la réception de l'heure de référence transmise par le serveur, et
la génération (S211) du paramètre de référence au moyen de l'heure de référence reçue et de l'heure locale actuelle du terminal mobile (100).

5. Le procédé selon la Revendication 1, comprenant en outre :
la génération (S211), lorsqu'aucun paramètre de référence conservé en mémoire antérieurement n'existe, du paramètre de référence au moyen d'une heure de référence reçue d'un serveur et d'une heure locale actuelle du terminal mobile (100),
la modification (S101) de l'heure locale actuelle en fonction d'une entrée utilisateur,
la génération (S107) d'un paramètre de référence modifié au moyen de l'heure locale modifiée et de l'heure locale actuelle,
la génération d'un paramètre de référence standard au moyen du paramètre de référence et du paramètre de référence modifié,
la détection (S201) d'une commande de lecture destinée à la lecture du contenu protégé par des droits, et
le test (S213) d'une validité d'une licence du contenu protégé par des droits en faisant référence au paramètre de référence et à l'heure locale actuelle du terminal mobile (100).

6. Le procédé selon la Revendication 5, où la génération (S 107) du paramètre de référence comprend la soustraction de l'heure locale actuelle de l'heure de référence.

7. Le procédé selon la Revendication 5, où la génération (S 107) du paramètre de référence modifié comprend la soustraction de l'heure locale actuelle de l'heure locale modifiée.

8. Le procédé selon la Revendication 5, où la génération (S107) du paramètre de référence standard comprend l'addition du paramètre de référence et du paramètre de référence modifié.

9. Le procédé selon la Revendication 5, où la validité de la licence du contenu protégé par des droits est déterminée (S213) en faisant référence à une valeur obtenue par l'ajout du paramètre de référence à l'heure locale.

10. Un appareil de gestion de droits numériques d'un terminal mobile (100), l'appareil comprenant :
une unité à mémoire (150) destinée à la conservation en mémoire d'un contenu protégé par des droits, d'une licence à durée limitée destinée à la lecture du contenu protégé par des droits, d'une heure de référence transmise par un serveur destinée à définir une heure d'expiration de la licence et d'un paramètre de référence possédant un indice attribué associé au contenu protégé par des droits,
un module de lecture d'un contenu protégé par des droits (170) destiné à la lecture du contenu protégé par des droits si la licence est valide,
un module d'horloge (165) pour la fourniture d'une heure locale du terminal mobile (100),
une unité d'entrée (120) destinée à la réception d'une entrée d'une commande de modification d'heure locale, et
une unité de commande (160) agencée de façon à :
générer (S211) le paramètre de référence indiquant la différence entre l'heure de référence et l'heure locale au moyen d'une heure locale du moment où la licence a été acquise et de l'heure de référence,
appliquer (S107), lorsque l'heure locale est modifiée en réponse à la commande de modification d'heure locale, la durée modifiée au paramètre de référence, et
tester (S213) la validité de la licence en faisant référence au paramètre de référence appliqué à la durée modifiée associée.

11. L'appareil selon la Revendication 10, comprenant en outre :
un module d'actualisation d'horloge (167) destiné à la génération d'un signal de commande ordonnant la modification de l'heure locale et à l'envoi du signal de commande au module d'horloge (165), et
un module de test de validité de licence (169) destiné à tester (S213) la validité de la licence en faisant référence à un paramètre parmi le paramètre de référence et un paramètre de référence actualisé obtenu par l'application de la durée modifiée.

12. L'appareil selon la Revendication 11, où l'unité de commande (160) est agencée de façon à demander (S209), lorsque le contenu protégé par des droits est demandé à être lu et qu'aucune heure de référence n'existe dans l'unité à mémoire (150), à un serveur de transmettre l'heure de référence, et l'unité de commande est agencée de façon à recevoir l'heure de référence à partir du serveur.

13. L'appareil selon la Revendication 11, où le module de test de validité de licence (169) est agencé de façon à générer (S107) le paramètre de référence par la soustraction d'une heure locale actuelle du terminal mobile (100) de l'heure de référence, à générer (S 107) un paramètre de référence modifié par la soustraction de l'heure locale actuelle de l'heure locale modifiée, à générer un paramètre de référence standard par l'addition du paramètre de référence et du paramètre de référence modifié et à tester (S213) une validité de la licence du contenu protégé par des droits en faisant référence à une valeur obtenue par l'ajout du paramètre de référence standard à l'heure locale actuelle du terminal mobile (100) au moment où une commande de lecture destinée à la lecture du contenu protégé par des droits est détectée.
